# EUROPÄISCHE PATENTSCHRIFT

(11) **EP 1 183 827 B1**
(45) Veröffentlichungstag und Bekanntmachung des Hinweises auf die Patenterteilung: **19.08.2009**
(21) Anmeldenummer: 00943679.1
(22) Anmeldetag: 05.06.2000
(51) Int. Cl.: H04L 12/437, G05B 19/418, G05B 23/02

(54) **SCHALTUNGSANORDNUNG ZUR GESICHERTEN DATENÜBERTRAGUNG, INSBESONDERE IN RINGFÖRMIGEN BUSSYSTEMEN**
CIRCUIT FOR CARRYING OUT SECURED DATA TRANSMISSION, ESPECIALLY IN RING BUS SYSTEMS
CIRCUIT POUR TRANSMISSION PROTEGEE DE DONNEES, NOTAMMENT DANS DES SYSTEMES BUS ANNULAIRES

(30) Priorität: 04.06.1999 DE 19925693
(43) Veröffentlichungstag der Anmeldung: 06.03.2002
(73) Patentinhaber: PHOENIX CONTACT GmbH & Co. KG, 32825 Blomberg (DE)
(72) Erfinder: MEYER-GRÄFE, Karsten, D-33161 Hövelhof (DE); BEHR, Thorsten, D-32805 Horn-Bad Meinberg (DE); KRESS, Wolfram, D-53721 Siegburg (DE); WRATIL, Peter, D-21224 Rosengarten (DE)
(74) Vertreter: Herden, Andreas F.
(86) Internationale Anmeldenummer: PCT/DE2000/001796
(87) Internationale Veröffentlichungsnummer: WO 2000/076136

(56) Entgegenhaltungen:
- US-A- 5 115 177
- US-A- 5 274 546

## Beschreibung

Die Erfindung betrifft eine Schaltungsanordnung zur gesicherten Datenübertragung, insbesondere in ringförmigen Bussystemen.

Im Maschinen- und Anlagenbau werden heute nicht selten Bewegungen und Vorgänge gesteuert oder geregelt, die im Fehlerfall oder bei Versagen eine Gefahr für das Leben und die Gesundheit von Personen, insbesondere des bedienenden Personals, darstellen. Neben diesen Gefahren gilt es aber auch wertvolle Maschinenteile zu schützen, die bei möglichen Fehlfunktionen hohe finanzielle Schäden erleiden können.

Eventuell auftretende Fehler müssen daher durch den Prozeß bzw. die vorhandenen Steuereinrichtungen erkannt werden, und die Maschine sollte stets in einem Zustand geführt werden, der als gefahrlos anzusehen ist. In der Regel sind hierfür redundante Strukturen notwendig, die unabhängig von der eigentlichen Steuerung oder Regelung die Sicherheitsfunktionen überwachen. Im Maschinen- oder Anlagenbau ist zur Fehlererkennung häufig eine Feststellung eines Einfachfehlers hinreichend. Nach Erkennen dieses Fehlers kann dann der Steuerungsprozeß abgebrochen werden und in einem sicheren Zustand verweilen. Ein eventueller Schaden durch die fehlerhafte Fortführung des Prozesses ist damit unterbunden.

Die Verfahren zur Fehlererkennung und deren notwendige Maßnahmen sind in den internationalen Normen DIN V VDE 0801 und DIN ISO 61508 festgehalten. Durch die Grundlagen dieser Normen haben die Hersteller von Automatisierungseinrichtungen in den letzten Jahren unterschiedliche Strategien entwickelt, welche sichere Übertragungen an Bussystemen erlauben, siehe beispielsweise den Profibus mit F-Profil, PNO und Safety-Bus P, der Fa. Pilz und Sick.

Zusätzlich werden Steuerungen auf den Markt gelangen, die bereits intern redundante Strukturen aufweisen und so im Zusammenspiel mit den genannten sicheren Bussystemen eine Fehlererkennung zulassen, siehe beispielsweise die Bussysteme der Fa. Siemens, insbesondere die Gerätereiche S 7 400 F, oder die PSS 3000-Serie der Firma Pilz.

Die dort implementierten Verfahren lassen sich jedoch nur bei vollständig neuer Installation der notwendigen Komponenten einsetzen und schützen nur mangelhaft gegen systematische Fehler.

Die US-A-5 115 177 beschreibt ein Störungsdiagnosesystem zur Diagnose einer Fehlfunktion einer Steuerung mit zentraler Überwachungseinheit unter Verwendung eines "host computers". Der "host computer" liest Ein- und Ausgangssignale und bestimmt die Fehlfunktion durch Verarbeitung dieser Signale. Für den Fall, daß sich die Störung als nicht reparierbar herausstellt, wird der Steuerungsprozeß unterbrochen.

In der US-A-5 274 546 wird ein Diagnosesystem für Steuerungseinrichtungen vorgestellt. Diese Schrift zeigt ein Verfahren zum Detektieren der Störungsursache unter Verwendung eines Diagnoseprozessors.

Die Erfindung macht es sich zur Aufgabe, Fehler in einem Prozeß zu erkennen, der lediglich mit Standardeinheiten aufgebaut ist.

Darüber hinaus sollen vorzugsweise nicht nur eventuelle Fehler beim Datentransport über ein verwendetes Bussystem, sondern auch Störungen oder Programmierfehler in der Steuerungseinrichtung erkannt und eliminiert werden.

Diese Aufgabe wird durch ein System zur gesicherten Datenübertragung in ringförmigen Bussystemen gelöst, welches eine Steuerung umfasst, welche Ausgangsdaten und Kontrollsignale für einen Steuerungsprozeß zu peripheren Einheiten sendet, sowie eine periphere Überwachungseinheit, die eine erste Transfer-Einheit zur Überwachung der gesendeten Daten und eine zweite Transfer-Einheit zur Überwachung von in die Steuerung zurückzulesenden Daten aufweist. Zudem umfasst das System mindestens eine periphere sicherheitsrelevante Einheit zum Empfangen oder Senden von Daten mit Sicherheitsbezug, in der Daten zur Ausgabe zwischengespeichert werden, die eine Kontroll-Logik zur Überwachung der zwischengespeicherten Daten und eine Ausgabe-Einheit zur Ausgabe der zwischengespeicherten Daten aufweist. Hierbei werden die zwischengespeicherten Daten durch die Kontroll-Logik so überwacht, daß im Fehlerfall ein sicherer Zustand, insbesondere ein sicherer Zustand der Ausgabe-Einheit, für den Steuerungsprozeß eingeleitet wird, wobei die erste Transfer-Einheit die von der Steuerung ausgesendeten Daten derart überwacht, daß im Fehlerfall Freigabe-Daten für die periphere sicherheitsrelevante Einheit unterdrückt oder gelöscht werden, so daß fehlerhafte Daten nicht in den Steuerungsprozeß gelangen. Hierbei werden über die zweite Transfer-Einheit die Eingangsdaten der peripheren sicherheitsrelevanten Einheit sowie deren zwischengespeicherten Daten zurückgelesen.

Zudem wird die Aufgabe gelöst durch eine Anordnung mit einer peripheren sicherheitsrelevanten Einheit in einem System zur gesicherten Datenübertragung in ringförmigen Bussystemen, welche zwei Buseinheiten umfaßt, um die auszugebenden Daten einer Buseinheit auch auf den Eingangsteil der anderen Buseinheit weiterzugeben, um Informationen vom Steuerungsprozeß über redundante Eingabe-Kanäle holen zu können, und um die auszugebenden Daten einer peripheren Überwachungseinheit zum Zurücklesen zur Verfügung stellen zu können. Zudem umfaßt die Anordnung einen Zwischenspeicher, in dem die auszugebenden Daten vor der Freigabe abgelegt werden, eine Ausgabe-Logik, worüber die zwischengespeicherten Daten ausgegeben werden und eine Kontroll-Logik, die darüber entscheidet, ob die im Zwischenspeicher gespeicherten Daten über die Ausgabe-Logik ausgegeben werden.

Die Erfindung wird nachfolgend detaillierter anhand der beigefügten Zeichnungen und unter Bezugnahme auf bevorzugte Ausführungsformen beschrieben.

Es zeigen:
- Fig. 1: den Aufbau für einer ersten Ausführungsform eines Systems zur gesicherten Datenübertragung,
- Fig. 2: eine bevorzugte Ausführungsform einer erfindungsgemäßen Anordnung mit peripherer sicherheitsrelevanter Einheit, wobei der interne Aufbau der peripheren sicherheitsrelevanten Einheit des Systems zur gesicherten Datenübertragung gezeigt ist.

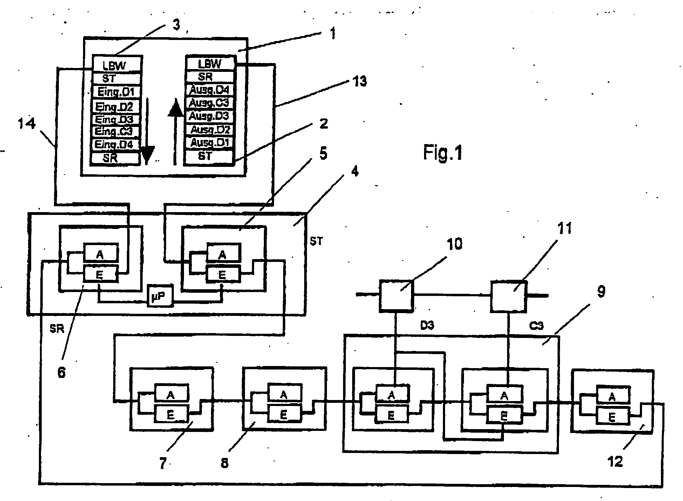

Die Erfindung wird nachfolgend detaillierter, zunächst unter Bezugnahme auf Fig. 1 beschrieben. Fig. 1 zeigt einen geeigneten Aufbau für ein derartiges System.

Die Steuerung (1) übernimmt im Prozeß alle Steuerungs- und Regelfunktionen, wie dies beispielsweise von dem herkömmlichen Interbus-System her bekannt ist. Die Steuerung (1) erkennt auch mögliche Fehler und kann Prozesse unterbrechen oder in einen sicheren Zustand führen.

Im Falle eines eigenen Versagens oder bei fehlerhaftem Datentransport ist die Steuerung (1) jedoch herkömmlicherweise nicht in der Lage, den gewünschten sicheren Zustand herbeizuführen. Dieser Ausfall ist beispielsweise auch dann gegeben, wenn in dem Steuerungssystem bereits eine weitgehende Trennung von Prozeßsteuerung und Sicherheitskontrolle vorliegt. Da es in herkömmlicher Weise auch hier keine Redundanz gibt, wird ein unerkannter Fehler möglicherweise schwerwiegende Folgen haben.

Entsprechend der Erfindung werden weitere Komponenten hinzugefügt, die einen möglichen Fehler erkennen und eliminieren. Diese Einheiten sind: Eine periphere Überwachungseinheit (4) und eine oder mehrere periphere sicherheitsrelevante Einheiten (9) im Prozeß-9, die nur dort notwendig sind, wo Daten mit Sicherheitsbezug empfangen oder gesendet werden.

Die Steuerung (1) beinhaltet ein Daten-Abbild-Register (2), das alle Ausgangsdaten und weitere Kontrollsignale über die Datenleitung (13) zu den peripheren Einheiten (7, 8, 12, periphere sicherheitsrelevante Einheit 9 und periphere Überwachungseinheit 4) sendet.

Da der Bustransport ähnlich wie ein Schieberegister funktioniert, senden alle peripheren Einheiten über die Rückleitung (14) im gleichen Buszyklus ihre Eingangsdaten zur Steuerung, die im Daten-Abbild-Register (3) zur Verfügung stehen. In einem folgenden SPS-Zyklus (Speicherprogrammierbaren-Steuerungs-Zyklus) verarbeitet die SPS (Speicher-programmierbare-Steuerung) nun die Daten aus ihren beiden Abbild-Registern (2, 3) und erzeugt so den notwendigen Zustand für den Prozeß.

Ohne die periphere Überwachungseinheit (4) und die periphere sicherheitsrelevante Einheit (9) ist die SPS jedoch nicht in der Lage, einen Programmierfehler, einen Zustand durch Störung oder Ausfall oder einen Datenfehler durch falschen Bustransport zu regeln. Die periphere Überwachungseinheit (4) beinhaltet daher einen eigenen Mikroprozessor, der die gesendeten Daten der SPS überwacht und nur die sicherheitsrelevante Größen auf Sinnfälligkeit, insbesondere deren Korrektheit, untersucht.

So ist die periphere Überwachungseinheit (4) mit der Transfer-Einheit (5) in der Lage, die SPS zu überwachen. Die periphere Überwachungseinheit (4) kann aber noch zusätzlich über die im Rücklauf installierte Transfer-Einheit (6) auch die Daten der Eingänge der peripheren Einheiten lesen. Da die periphere sicherheitsrelevante Einheit (9) ihre Ausgangsinformation (D3) auch c.irekt an den Eingangsteil der Buseinheit (23) weitergibt, gelingt so eine direkte Kontrolle, ob der Bustransfer ordnungsgemäß funktioniert hat.

Ferner ist die periphere Überwachungseinheit (4) mit ihrer Transfer-Einheit (5) auch in der Lage, die Daten für die periphere sicherheitsrelevante Einheit (9) zu manipulieren.

Die periphere Überwachungseinheit (4) kann insbesondere Daten der SPS überschreiben und so eine Zustimmung zur Datenausgabe von der peripheren sicherheitsrelevanten Einheit (9) unterbinden. Die periphere sicherheitsrelevante Einheit (9) wird nur dann aktiv, wenn diese über die Kontroll-Logik (11) eine Zustimmung für die Daten der Ausgabe-Einheit (10) erhalten hat.

### Das Timing mit dem Datentransport ist in der folgenden

Tabelle gezeigt:

| S h | MT | ST | | 1 | | 2 | | D3 | | C3 | | 4 | | SR | | MR |
|---|---|---|---|---|---|---|---|---|---|---|---|---|---|---|---|---|
| | | A | E | A | E | A | E | A | E | A | E | A | E | A | E | |
| 0 | LB | | ST | | E1 | | E2 | | E3 | | EC | | E4 | | ES | |
| | W | | | | | | | | | | 3 | | | | R | |
| 1 | AS | LB | LB | ST | ST | E1 | E1 | E2 | E2 | E3 | E3 | EC | EC | E4 | E4 | ES |
| | R | W | W | | | | | | | | | 3 | 3 | | | R |
| 2 | A4 | AS | AS | LB | LB | ST | ST | E1 | E1 | E2 | E2 | E3 | E3 | EC | EC | E4 |
| | | R | R | W | W | | | | | | | | | 3 | 3 | |
| 3 | 1 | A4 | A4 | AS | AS | LB | LB | ST | ST | E1 | E1 | E2 | E2 | E3 | E3 | EC |
| | | | | R | R | W | W | | | | | | | | | 3 |
| 4 | A3 | 1 | AC | A4 | A4 | AS | AS | LB | LB | ST | ST | E1 | E1 | E2 | E2 | E3 |
| | | | 3 | | | R | R | W | W | | | | | | | |
| 5 | A2 | A3 | A3 | AC | AC | A4 | A4 | AS | AS | LB | LB | ST | ST | E1 | E1 | E2 |
| | | | | 3 | 3 | | | R | R | W | W | | | | | |
| 6 | A1 | A2 | A2 | A3 | A3 | AC | AC | A4 | A4 | AS | AS | LB | LB | ST | ST | E1 |
| | | | | | | 3 | 3 | | | R | R | W | W | | | |
| 7 | ST | A1 | A1 | A2 | A2 | A3 | A3 | AC | AC | A4 | A4 | AS | AS | LB | LB | ST |
| | | | | | | | | 3 | 3 | | | R | R | W | W | |
| 8 | | ST | ST | A1 | A1 | A2 | A2 | A3 | A3 | AC | AC | A4 | A4 | AS | AS | LB |
| | | | | | | | | | | 3 | 3 | | | R | R | W |

Das Timing-Diagramm zeigt den Zustand nach jeder Schiebe-Information im Ring anhand eines bevorzugten Beispiels, dem Interbus System der Firma Phoenix Contact GmbH und Co. KG.

Die Information AC3 ist von der peripheren Überwachungseinheit (4) mit der Transfer-Einheit (5) manipulierbar und kann überschrieben werden. Somit erhält die periphere sicherheitsrelevante Einheit (9) in ihrer Kontroll-Logik (11) eine Zusatz-Information, die eine fehlerhafte Ausgabe unterbindet.

Wie aus dem Timing-Diagramm ebenfalls ersichtlich ist, kann die periphere Überwachungseinheit (4) auch die Daten der Ausgabe von der peripheren sicherheitsrelevanten Einheit (9) lesen (EC3). Diese Daten stellen die direkte AusgabeInformation der peripheren sicherheitsrelevanter. Einheit (9) dar, so daß ein Busfehler sicher erkannt wird.

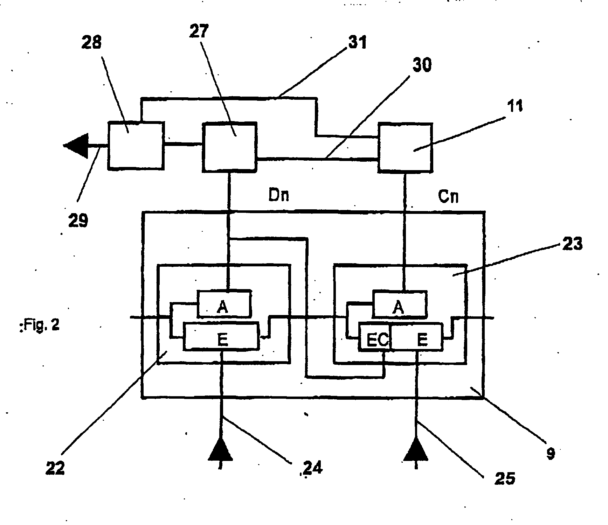

Eine Anordnung mit einer peripheren sicherheitsrelevanten Einheit sowie der interne Aufbau der peripheren sicherheitsrelevanten Einheit (9) ist in Fig. 2 dargestellt.

Die periphere sicherheitsrelevante Einheit (9) besteht aus zwei Buseinheiten (22, 23), so daß Eingangsinformationen redundant vom Steuerungsprozeß geholt werden können (24, 25). Zusätzlich wird die Ausgabeinformation Dn von einer Buseinheit (22) über den Eingangsteil der anderen Buseinheit (23) abgebildet. Ein möglicher Fehler bei der internen Ablage oder beim Bustransport wird damit im Folge-Zyklus des Bustransports erkannt. Die Ausgabeinformation von Dn wird von der Steuerung (SPS) in den Zwischenspeicher (27) geschrieben.

Die Kontroll-Logik (11) entscheidet aber zusätzlich darüber, ob die Information des Zwischenspeichers (27) über die Ausgabe-Logik (28) an der Peripherie erscheint. Diese Kontroll-Logik (11) kann entweder die gespeicherte Information freigeben über die Leitung (30) oder den Zustand löschen über die Leitung (31), so daß der Ausgang (29) den Steuerungsprozeß in einen sicheren Zustand bringt.

Die Schaltungsanordnung funktioniert daher im Prinzip in vielen Bereichen genauso, wie ein normales dezentrales SPS-System. Die Komponenten erlauben es lediglich zusätzlich, Eingänge redundant zu überwachen und gespeicherte Ausgabeinformationen vor der Ausgabe auf Sinnfälligkeit, insbesondere Fehlerfreiheit, zu untersuchen. Ferner kann die Überwachungseinheit auch Fehler erkennen, die nicht nur durch Ausfall oder Störung zustande gekommen sind, sondern einen Programmier- oder Parametrierfehler als Ursache hatten.

Die vorliegende Schaltungsanordnung erlaubt es somit, an ringförmigen Standardbussystemen Daten zu übertragen, die für den Aufbau fehlertoleranter Strukturen notwendig sind.

Zur Realisierung wird eine Überwachungseinheit und werden periphere Ein- und Ausgabeeinheiten, die Daten zur Regelung oder Steuerung senden oder entgegennehmen, eingesetzt.

Die Schaltungsanordnung übernimmt die Aufgabe, eventuelle Fehler zu erkennen, die für den Steuerungsprozeß, insbesondere für die Übertragung von Steuerungs-, Sensor- oder Aktordaten, innerhalb einer Maschine oder Anlage zur Gefahr werden können. Durch den internen Aufbau identifiziert die Schaltungsanordnung bereits vor der Fehlerübertragung zum Steuerungsprozeß einen eventuellen Fehler und leitet eine gesicherte Abschaltung ein. Dabei ist es gleichgültig, ob die externe Steuerung oder das verwendete Bussystem für den Fehler verantwortlich ist.

## Patentansprüche

1. System zur gesicherten
Datenübertragung in ringförmigen Bussystemen, umfassend
- eine Steuerung (1), die Ausgangsdaten und Kontrollsignale für einen Steuerungsprozeß zu peripheren Einheiten (4, 7, 8, 9, 12) sendet,
- eine periphere Überwachungseinheit (4), die eine erste Transfer-Einheit (5) zur Überwachung der gesendeten Daten und eine zweite Transfer-Einheit (6) zur Überwachung von in die Steuerung (1) zurückzulesenden Daten aufweist, und mindestens eine periphere sicherheitsrelevante Einheit (9) zum Empfangen oder Senden von Daten mit Sicherheitsbezug, in der Daten zur Ausgabe zwischengespeichert werden, die eine Kontroll-Logik (11) zur Überwachung der zwischengespeicherten Daten und eine Ausgabe-Einheit (10) zur Ausgabe der zwischengespeicherten Daten aufweist,
wobei die zwischengespeicherten Daten durch die Kontroll-Logik (11) so überwacht werden, daß im Fehlerfall ein sicherer Zustand für den Steuerungsprozeß eingeleitet wird,
wobei die erste Transfer-Einheit (5), die von der Steuerung (1) ausgesendeten Daten derart überwacht, daß im Fehlerfall Freigabe-Daten für die periphere sicherheitsrelevante Eir.heit (9) unterdrückt oder gelöscht werden, so daß fehlerhafte Daten nicht in den Steuerungsprozeß gelangen,
wobei über die zweite Transfer-Einheit (6) die Eingangsdaten der peripheren sicherheitsrelevanten Einheit (9) sowie deren zwischengespeicherten Daten zurückgelesen werden.

2. System nach Anspruch 1
**dadurch gekennzeichnet,**
**daß** die zwischengespeicherten Daten und die Eingangsdaten der peripheren sicherheitsrelevanten Einheit (9) der peripheren Überwachungseinheit (4) zur Verfügung gestellt werden.

3. System nach Anspruch 1 oder 2,
**dadurch gekennzeichnet,**
**daß** die periphere sicherheitsrelevante Einheit (9) über-eine Bus-Einheit (23) die zwischengespeicherten Daten zurückliest.

4. System nach den Ansprüchen 1 bis 3,
**dadurch gekennzeichnet, daß** die periphere sicherheitsrelevante Einheit (9) über einen Zwischenspeicher (27) verfügt, der von einer Bus-Einheit -(23) gelesen wird- und so noch vor der Freigabe zum Steuerungsprozeß
über einen Ausgang (29) von der peripheren Überwachungseinheit (4) kontrolliert wird.

5. System nach den Ansprüchen 3 oder 4,
**dadurch gekennzeichnet,**
**daß** die periphere sicherheitsrelevante Einheit (9) eine weitere Buseinheit (22) umfaßt, so daß die
periphere sicherheitsrelevante Einheit (9) über redundante Eingabe-Kanäle (24, 25) verfügt und so den angeschlossenen Steuerungsprozeß redundant überwacht und einen Fehler erkennen kann.

6. System nach den Ansprüchen 1 bis 5,
**dadurch gekennzeichnet,**
**daß** die Kontroll-Logik (11) darüber entscheidet, ob die im Zwischenspeicher (27) gespeicherten Daten über die Ausgabe-Logik (28) ausgegeben werden.

7. System nach den Ansprüchen 1 bis 6,
**dadurch gekennzeichnet,**
**daß** die Kontroll-Logik (11) die zwischengespeicherten Daten freigibt oder löscht.

8. System nach den Ansprüchen 1 bis 7,
**dadurch gekennzeichnet,**
**daß** die periphere Überwachungseinheit (4) mit der ersten Transfer - Einheit (5) in der Lage ist, die Daten für die periphere sicherheitsrelevante Einheit (9) zu manipulieren.

9. System nach den Ansprüchen 1 bis 8,
**dadurch gekennzeichnet,**
**daß** die periphere Überwachungseinheit (4) Daten einer Steuerung (1)-überschreibt.

10. System nach Anspruch 1 bis 9,
**dadurch gekennzeichnet,**
**daß** durch das Überschreiben der Daten, die Zustimmung zur Datenausgabe aus der peripheren sicherheitsrelevanten Einheit (9) unterbunden wird.

11. System nach den Ansprüchen 1 bis 10,
**dadurch gekennzeichnet,**
**daß** die Kontroll-Logik (11) von der peripheren Überwachungseinheit (4) eine Information erhält, die eine fehlerhafte Ausgabe unterbindet.

12. System nach den Ansprüchen 1 bis 11,
**dadurch gekennzeichnet,**
**daß** die periphere sicherheitsrelevante Einheit (9) nur dann aktiv wird, wenn diese über die Kontroll-Logik (11) eine Zustimmung für die Daten der Ausgabe-Einheit (10) erhalten hat.

13. System nach den Ansprüchen 1 bis 12,
**dadurch gekennzeichnet,**
**daß** die peripheren Einheiten (4, 7, 8, 9, 12) selbst logische Verknüpfungen durchführen können und so im Gesamtverbund eine höhere Prozeßgeschwindigkeit erreicht wird.

14. System nach den Ansprüchen 1 bis 13,
**dadurch gekennzeichnet,**
**daß** die periphere Überwachungseinheit (4) selbst Steuerungsfunktionen übernimmt und so ein Verbund mit einer Sicherheitssteuerung entsteht.

15. System nach den Ansprüchen 1 bis 14,
**dadurch gekennzeichnet,**
**daß** eine Sicherheitsfunktion des Systems auch nachträglich durch Hinzufügen von Hardware Elementen oder Software Bausteinen erweiterbar ist.

16. Anordnung mit
- einer peripheren sicherheitsrelevanten Einheit in einem System zur gesicherten Datenübertragung in ringförmigen Bussystemen,
wobei die periphere sicherheitsrelevante Einheit (9) zwei Buseinheiten (22,23) umfasst, um die auszugebenden Daten einer Buseinheit (22) auch auf den Eingangsteil der anderen Buseinheit (23) weiterzugeben, um Informationen vom Steuerungsprozeß über redundante Eingabe-Kanäle (24, 25) holen zu können, und um die auszugebenden Daten einer peripheren Überwachungseinheit (4) zum Zurücklesen zur Verfügung zu stellen,
- einem Zwischenspeicher (27), in dem die auszugebenden Daten vor der Freigabeabgelegt werden,
- einer Ausgabe-Logik (28) worüber die zwischengespeicherten Daten ausgegeben werden und
- einer Kontroll-Logik (11), die darüber entscheidet, ob die im Zwischenspeicher (27) gespeicherten Daten über die Ausgabe-Logik (28) ausgegeben werden.

17. Anordnung mit einer peripheren sicherheitsrelevanten Einheit nach Anspruch 16,
**dadurch gekennzeichnet,**
**daß** die Kontroll-Logik (11) die zwischengespeicherten Daten freigibt oder löscht.

18. Anordnung mit einer peripheren sicherheitsrelevanten Einheit nach den Ansprüchen 16 oder 17, **dadurch gekennzeichnet,**
**daß** die Kontroll-Logik (11) Informationen von der peripheren Überwachungseinheit (4) erhält, um damit eine fehlerhafte Ausgabe unterbinden zu können.

## Claims

1. System for secured data transmission in ring bus systems, comprising
- a control (1) which emits output data and control signals for a control process to peripheral units (4, 7, 8, 9, 12),
- a peripheral monitoring unit (4) which has a first transfer unit (5) for monitoring the emitted data and a second transfer unit (6) for monitoring data to be read back into the control (1), and
- at least one peripheral security-relevant unit (9) for receiving or emitting data with a security reference, in which data are intermediately stored for output, which has a control logic (11) for monitoring the intermediately stored data and an output unit (10) for outputting the intermediately stored data,
wherein the intermediately stored data are monitored by the control logic (11) in such a way that in the event of an error a secure state is initiated for the control process,
wherein the first transfer unit (5) monitors the data emitted by the control (1) in such a way that, in the event of an error, enabling data for the peripheral security-relevant unit (9) are suppressed or deleted so that erroneous data do not enter the control process,
wherein by means of the second transfer unit (6) the input data of the peripheral security-relevant unit (9) and its intermediately stored data are read back.

2. System as claimed in claim 1, **characterised in that** the intermediately stored data and the input data of the peripheral security-relevant unit (9) are made available to the peripheral monitoring unit (4).

3. System as claimed in claim 1 or 2, **characterised in that** the peripheral security-relevant unit (9) reads the intermediately stored data back via a bus unit (23).

4. System as claimed in claims 1 to 3, **characterised in that** the peripheral security-relevant unit (9) has an intermediate memory (27) which is read by a bus unit (23) and is thus checked by the peripheral monitoring unit (4) via an output (29) even prior to release for the control process.

5. System as claimed in claims 3 or 4, **characterised in that** the peripheral security-relevant unit (9) has a further bus unit (22) so that the peripheral security-relevant unit (9) has redundant input channels (24, 25) and thus redundantly monitors the associated control process and can recognise an error.

6. System as claimed in claims 1 to 5, **characterised in that** the control logic (11) decides whether the data stored in the intermediate memory (27) are output via the output logic (28).

7. System as claimed in claims 1 to 6, **characterised in that** the control logic (11) releases or deletes the intermediately stored data.

8. System as claimed in claims 1 to 7, **characterised in that** the peripheral monitoring unit (4) with the first transfer unit (5) is able to manipulate the data for the peripheral security-relevant unit (9).

9. System as claimed in claims 1 to 8, **characterised in that** the peripheral monitoring unit (4) overwrites data of a control (1).

10. System as claimed in claim 1 to 9, **characterised in that** overwriting the data prevents approval for the data output from the peripheral security-relevant unit (9).

11. System as claimed in claims 1 to 10, **characterised in that**, from the peripheral monitoring unit (4), the control logic (11) obtains information which prevents an erroneous output.

12. System as claimed in claims 1 to 11, **characterised in that** the peripheral security-relevant unit (9) is activated only when this unit has obtained approval for the data of the output unit (10) via the control logic (11).

13. System as claimed in claims 1 to 12, **characterised in that** the peripheral units (4, 7, 8, 9, 12) can themselves carry out logic functions and thus a higher processing rate is achieved throughout the network.

14. System as claimed in claims 1 to 13, **characterised in that** the peripheral monitoring unit (4) itself takes over control functions and thus a network with a security control is produced.

15. System as claimed in claims 1 to 14, **characterised in that** a security function of the system can also be expanded retrospectively by addition of hardware elements or software components.

16. Arrangement having
- a peripheral security-relevant unit in a system for secured data transmission in ring bus systems, wherein the peripheral security-relevant unit (9) has two bus units (22, 23) in order to forward the data to be output from one bus unit (22) also to the input part of the other bus unit (23) in order to be able to obtain information from the control process about redundant input channels (24, 25) and in order to make available the data to be output from a peripheral monitoring unit (4) so that they can be read back,
- an intermediate memory (27) in which the data to be output are stored prior to release,
- an output logic (28) by means of which the intermediately stored data are output and
- a control logic (11) which decides whether the data stored in the intermediate memory (27) are output via the output logic (28).

17. Arrangement having a peripheral security-relevant unit (9) as claimed in claim 16, **characterised in that** the control logic (11) releases or deletes the intermediately stored data.

18. Arrangement having a peripheral security-relevant unit (9) as claimed in claims 16 or 17, **characterised in that** the control logic (11) obtains information from the peripheral monitoring unit (4) in order therewith to be able to prevent an erroneous output.

## Revendications

1. Système pour la transmission sécurisée des données dans des systèmes de bus de forme annulaire, comprenant
- une commande (1), qui envoie des données de sortie et des signaux de contrôle pour un processus de commande à des unités périphériques (4, 7, 8, 9, 12),
- une unité de contrôle (4) périphérique, qui présente une première unité de transfert (5) pour le contrôle des données envoyées et une seconde unité de transfert (6) pour le contrôle de données à retourner dans la commande (1), et
- au moins une unité (9) périphérique importante au niveau de la sécurité pour la réception ou l'envoi de données avec référence de sécurité, dans laquelle des données sont stockées provisoirement pour la sortie, qui présente une logique de contrôle (11) pour le contrôle des données stockées provisoirement et une unité de sortie (10) pour la sortie des données stockées provisoirement, les données stockées provisoirement étant contrôlées par la logique de contrôle (11) de telle sorte que, en cas d'erreur, un état sûr est mis en oeuvre pour le processus de commande,
la première unité de transfert (5) contrôlant les données envoyées par la commande (1) de telle sorte que, en cas d'erreur, des données de déblocage sont supprimées ou effacées pour l'unité (9) périphérique importante au niveau de la sécurité, de sorte que des données erronées ne parviennent pas dans le processus de commande,
les données d'entrée de l'unité (9) périphérique importante au niveau de la sécurité ainsi que leurs données stockées provisoirement étant retournées par la seconde unité de transfert (6).

2. Système selon la revendication 1,
**caractérisé en ce que**
les données stockées provisoirement et les données d'entrée de l'unité (9) périphérique importante au niveau de la sécurité sont mises à la disposition de l'unité de contrôle (4) périphérique.

3. Système selon la revendication 1 ou 2,
**caractérisé en ce que**
l'unité (9) périphérique importante au niveau de la sécurité retourne les données stockées provisoirement par l'intermédiaire d'une unité de bus (23).

4. Système selon les revendications 1 à 3,
**caractérisé en ce que** l'unité (9) périphérique importante au niveau de la sécurité dispose d'une mémoire intermédiaire (27), qui est lue par une unité de bus (23) et est contrôlée ainsi encore avant le déblocage pour le processus de commande via une sortie (29) par l'unité de contrôle (4) périphérique.

5. Système selon la revendication 3 ou 4,
**caractérisé en ce que**
l'unité (9) périphérique importante au niveau de la sécurité comporte une autre unité de bus (22), de sorte que l'unité (9) périphérique importante au niveau de la sécurité dispose de canaux d'entrée (24, 25) redondants et contrôle ainsi de façon redondante le processus de commande raccordé et peut détecter une erreur.

6. Système selon les revendications 1 à 5,
**caractérisé en ce que**
la logique de contrôle (11) décide du fait que les données stockées dans la mémoire intermédiaire (27) sont éditées par la logique de sortie (28).

7. Système selon les revendications 1 à 6,
**caractérisé en ce que**
la logique de contrôle (11) libère ou efface les données stockées provisoirement.

8. Système selon les revendications 1 à 7,
**caractérisé en ce que**
l'unité de contrôle (4) périphérique est en mesure avec la première unité de transfert (5) de manipuler les données pour l'unité (9) périphérique importante au niveau de la sécurité.

9. Système selon les revendications 1 à 8,
**caractérisé en ce que**
l'unité de contrôle (4) périphérique écrase des données d'une commande (1).

10. Système selon les revendications 1 à 9,
**caractérisé en ce que**
l'accord pour la sortie de données de l'unité (9) périphérique importante au niveau de la sécurité est interdit par l'écrasement des données.

11. Système selon les revendications 1 à 10,
**caractérisé en ce que**
la logique de contrôle (11) reçoit de l'unité de contrôle (4) périphérique une information qui interdit une sortie défectueuse.

12. Système selon les revendications 1 à 11,
**caractérisé en ce que**
l'unité (9) périphérique importante au niveau de la sécurité ne devient actif que dans les cas où celle-ci a reçu par la logique de contrôle (11) un accord pour les données de l'unité de sortie (10).

13. Système selon les revendications 1 à 12,
**caractérisé en ce que**
les unités périphériques (4, 7, 8, 9, 12) peuvent effectuer elles-mêmes des liaisons logiques et qu'ainsi une vitesse de processus plus élevée est obtenue dans l'interconnexion globale.

14. Système selon les revendications 1 à 13,
**caractérisé en ce que**
l'unité de contrôle (4) périphérique prend en charge elle-même des fonctions de commande et une interconnexion se forme ainsi avec une commande de sécurité.

15. Système selon les revendications 1 à 14,
**caractérisé en ce que**
une fonction de sécurité du système peut être étendue même ultérieurement par l'ajout d'éléments de matériel ou de composants de logiciel.

16. Agencement comprenant
- une unité périphérique importante au niveau de la sécurité dans un système pour la transmission de données sécurisées dans des systèmes de bus de forme annulaire, l'unité (9) périphérique importante au niveau de la sécurité comportant deux unités de bus (22, 23), afin de transmettre les données à éditer d'une unité de bus (22) également à la partie d'entrée de l'autre unité de bus (23), afin de pouvoir aller chercher des informations venant du processus de commande par des canaux d'entrée (24, 25) redondants, et afin de mettre les données à éditer à la disposition d'une unité de contrôle (4) périphérique pour la lecture retour,
- une mémoire intermédiaire (27), dans laquelle les données à éditer sont déposées avant le déblocage,
- une logique de sortie (28) par laquelle les données stockées provisoirement sont éditées et
- une logique de contrôle (11) qui décide du fait que les données stockées dans la mémoire intermédiaire (27) sont éditées par la logique de sortie (28).

17. Agencement avec une unité périphérique importante au niveau de la sécurité selon la revendication 16,
**caractérisé en ce que**
la logique de contrôle (11) libère ou supprime les données stockées provisoirement.

18. Agencement comprenant une unité périphérique importante au niveau de la sécurité selon la revendication 16 ou 17,
**caractérisé en ce que**
la logique de contrôle (11) reçoit des informations de l'unité de contrôle (4) périphérique, afin de pouvoir interdire ainsi une sortie défectueuse.
